# EUROPEAN PATENT APPLICATION

(11) **EP 1 134 731 A2**
(43) Date of publication of application: **19.09.2001**
(21) Application number: 01302320.5
(22) Date of filing: 14.03.2001
(51) Int. Cl.: G11B 5/62, G11B 5/64, G11B 5/84, G11B 5/852, G11B 5/855, H01F 10/00

(54) **Discrete magnetic thin film elements having perpendicular magnetization**

(30) Priority: 16.03.2000 JP 2000074275
(71) Applicant: Toda Kogyo Corporation, Hiroshima-shi, Hiroshima-ken (JP)
(72) Inventor: Shinjo, Teruya, Uji-shi, Kyoto-fu (JP)
(74) Representative: Woods, Geoffrey Corlett

(57) **Abstract**

A magnetic film comprising:
a substrate; and
a ferromagnetic film which is provided on said substrate and which has an average diameter of 0.1 to 10 µm, a thickness of 0.005 to 1.5 µm and a ratio of said thickness to said average diameter of not more than 0.5:1,
said ferromagnetic film having at a center portion thereof a perpendicular magnetization component, which is oriented or magnetized in the up or down direction perpendicular to the surface of said magnetic film.

## Description

The present invention relates to a magnetic thin film and a process for producing the magnetic thin film, and more particularly, to a magnetic thin film comprising a ferromagnetic film (micro dot) being formed on a substrate using micro-processing techniques and having a perpendicular magnetization component at a center portion thereof, and a process for producing such a magnetic thin film.

At present, magnetic materials have been used in various applications. The magnetism of these magnetic materials is produced due to two kinds of electron spins, i.e., those oriented in up and down directions. By controlling the directions of the electron spins, the magnetic materials have been already put into practice in many applications, and are highly expected to further expand the application fields. Examples of such applications in which the magnetic materials have been already used, include longitudinally or perpendicularly magnetizable magnetic recording media; magnetic heads used for writing and reading of magnetic disks; microtransformers, microinductors or magnetic sensors incorporated into magnetic integrated circuits; or the like.

With recent tendencies toward high-function, high-performance and miniaturization of various electronic parts as well as high-density recording, with respect to magnetic materials, especially magnetic devices composed of magnetic thin films, it has been strongly required to develop new materials or new devices showing still improved properties or new functions.

In this regard, in "Journal of Japan Applied Magnetics", Vol. 23, No. 10 (1999), p. 1983, it is described that "when sizes of magnetic materials are reduced to nano-scale level, quite new quantum phenomenon due to the degree of freedom of spins which has never been observed in macro size, becomes remarkable. ····· The development of new materials or new devices utilizing the degree of freedom of spins is of a great interest from the standpoints of new functions and improvement in conventional characteristics".

In order to obtain such new materials having new functions, it is required to provide a magnetic thin film capable of not only exhibiting excellent properties in association with electron spins, but also easily controlling the electron spins. To achieve this requirement, it is important that a ferromagnetic film in the form of a microdot of a nano-scale level is formed on a substrate using micro-processing techniques.

In this regard, it has been clearly described that "One factor for accelerating the development of micro-processing techniques for magnetic materials, is an increasing demand for still higher density of spin valve heads used for high-density recording as well as high-density magnetic recording media such as patterned media, and the other important factor is a new development beginning at the late 1980 in fundamental and applied fields of magnetic materials such as spin-scattered magneto-resistance effect, spin valve effect and spin-polarized electron tunneling effect. ····· Researches concerning such quantum effects and actual production of magnetic devices utilizing these effects essentially requires micro-processing techniques for processing magnetic materials into nanometer size" (refer to "Pamphlet of the 111st research meeting of Institute of Japan Applied Magnetics", pp. 1-7).

At present, it has been strongly demanded to provide magnetic thin films capable of exhibiting new functions compatible with high-function, high-performance, miniaturization and high-density of recent magnetic devices. However, magnetic thin films satisfying such requirements have not been obtained until now.

Namely, in the case of conventionally known magnetic thin films, the electron spins thereof are controlled only as a whole in longitudinal or perpendicular direction. However, there is no magnetic film constituted by a ferromagnetic film in the form of a micro dot having a perpendicular magnetization component at a center portion thereof.

As a result of the present inventors' earnest studies for solving the above problems, it has been found that by forming a resist film on a substrate; irradiating an electron beam, light, X-ray or ion beam onto a part of the said resist film; dissolving the irradiated part of the resist film with an organic solvent to remove the part of the resist film from the substrate; forming a ferromagnetic film over the remaining resist film and an exposed portion of the substrate from which the resist film is removed; and removing the resist film together with the ferromagnetic film laminated thereon so that only the ferromagnetic film directly formed on the substrate remains on the substrate, the obtained ferromagnetic film (in the form of a micro dot) is different in structure, and in direction and region of electron spins from conventional magnetic films. The present invention has been attained based on the finding.

An object of the present invention is to provide a magnetic thin film in the form of a micro dot, which is different in direction and region of electron spins from conventional magnetic films.

Another object of the present invention is to provide a magnetic thin film constituted by a ferromagnetic film in the form of a micro dot, which has at a center portion thereof a perpendicular magnetization component oriented or magnetized in the up or down direction perpendicular to the surface of the ferromagnetic film.

An other object of the present invention is to provide a magnetic thin film constituted by a ferromagnetic film in the from of a micro dot, which has at a center portion thereof a perpendicular magnetization component magnetized in the up or down direction perpendicular to the surface of the ferromagnetic film, and a circulating magnetic domain structure (a vortex structure or a spiral magnetization structure) which is oriented or magnetized in the clockwise or counterclockwise direction around the perpendicular magnetization component as a center.

To accomplish the aims, in a first aspect of the present invention, there is provided a magnetic thin film comprising:
a substrate; and
a ferromagnetic film in the form of a micro dot, which is formed on the substrate and has an average diameter of 0.1 to 10 µm, a thickness of 0.005 to 1.5 µm and a ratio of the thickness to the average diameter of not more than 0.5:1,
the said ferromagnetic film having at a center portion thereof a perpendicular magnetization component oriented or magnetized in the up or down direction perpendicular to the surface of the ferromagnetic film.

In a second aspect of the present invention, there is provided a magnetic thin film comprising:
a substrate; and
a ferromagnetic film in the form of a micro dot, which is formed on the substrate and has an average diameter of 0.1 to 10 µm, a thickness of 0.005 to 1.5 µm and a ratio of the thickness to the average diameter of not more than 0.5:1,
the said ferromagnetic film having at a center portion thereof a perpendicular magnetization component oriented or magnetized in the up or down direction perpendicular to the surface of the ferromagnetic film, and a circulating magnetic domain structure (a vortex structure or a spiral magnetization structure), which is oriented or magnetized in the clockwise or counterclockwise direction around the perpendicular magnetization component as a center.

In a third aspect of the present invention, there is provided a process for producing the above-mentioned magnetic thin film, comprising:
forming a resist film on a substrate;
irradiating an electron beam, light, X-ray or ion beam onto a part of the resist film;
dissolving the irradiated part of the resist film with an organic solvent to remove the part of the resist film having an average diameter of 0.1 to 10 µm from the substrate;
forming a ferromagnetic thin film over the remaining resist film and an exposed portion of the substrate from which the resist film is removed so that a ferromagnetic film having a thickness of 0.005 to 1.5 µm and a ratio of the thickness to the average diameter of not more than 0.5:1 is formed on the exposed portion of the substrate; and
removing the resist film together with the ferromagnetic film laminated thereon so that only the ferromagnetic film directly formed on the substrate remains on the substrate.

The invention is illustrated by the following drawings.

Fig. 1 is a schematic view showing a plurality of magnetic thin films according to the present invention.

Fig. 2 is a snapshot of spin structure of a top surface of a ferromagnetic film according to the present invention.

Fig. 3 is a snapshot of spin structure showing a cross-section taken along the line II-II of Fig. 2.

Fig. 4 is a snapshot of spin structure of a top surface of another ferromagnetic film according to the present invention.

Fig. 5 is a flow chart showing a process for producing the magnetic thin film of the present invention.

Fig. 6 is a magnetic force microscope (MFM) photograph of the magnetic thin film obtained in Example 1.

Fig. 7 is an MFM photograph of the magnetic thin film obtained in Example 2.

Fig. 8 is an MFM photograph of the magnetic thin film obtained in Example 2 to which a magnetic field was applied in the direction perpendicular to the surface of the magnetic thin film.

The present invention will be described in detail below.

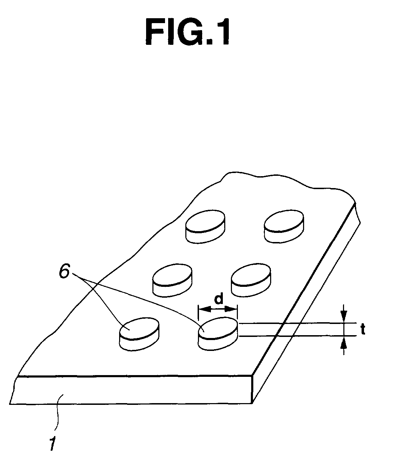

As shown in Fig. 1, the magnetic thin film of the present invention is constituted by a ferromagnetic film 6 in the form of a micro dot, which is formed on a substrate 1 and has an average diameter (d) of 0.1 to 10 µm, a thickness (t) of 0.005 to 1.5 µm and a ratio (t/d) of the thickness to the average diameter of not more than 0.5:1.

As the substrate, there may be used any suitable substrates ordinarily used for the production of magnetic recording media or the like. Examples of the substrates may include silicon substrates, glass substrates, MgO substrates or the like. Among these substrates, the silicon substrates are preferred. The thickness of the substrate is not particularly restricted, and preferably in the range of 0.01 to 1 mm.

The ferromagnetic film may be made of any ferromagnetic materials such as metals, oxides and nitrides. In particular, as the ferromagnetic materials, soft-magnetic materials are preferred. Specific examples of the ferromagnetic materials may include metal elements such as Fe, Ni and Co; alloys such as Fe-Ni alloy (permalloy), Fe-Si alloy and Fe-Si-Al alloy (sendust); oxides such as Fe-M-O (wherein M is Ta, Zr, Nb, Hf or the like), Mn-Zn ferrite and Ni-Zn ferrite; or nitrides such as Fe-M-N (wherein M is Ta, Zr, Nb, Hf or the like). Among these ferromagnetic materials, the alloys such as Fe-Ni alloy (permalloy), Fe-Si alloy and Fe-Si-Al alloy (sendust) are preferred, and the Fe-Ni alloy is more preferred.

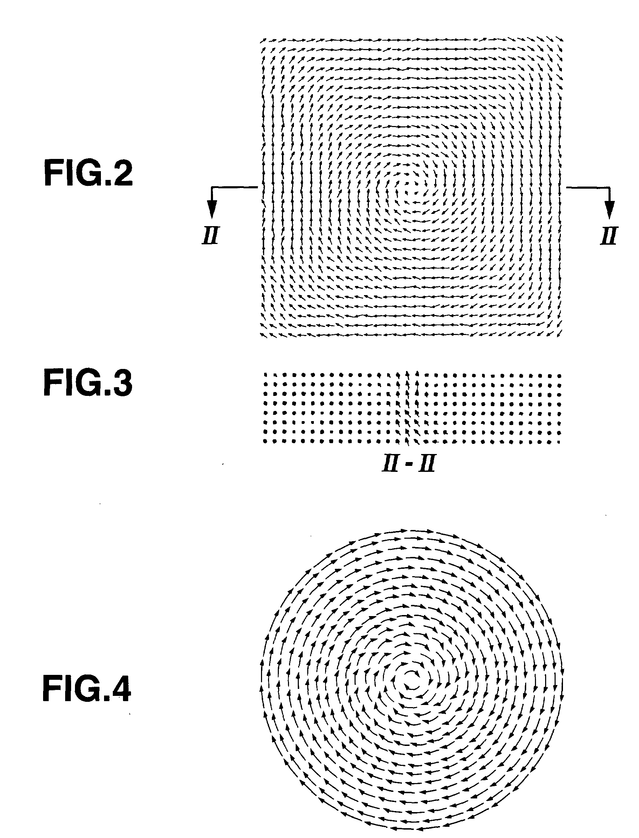

As apparent from the snapshot of spin structure (across the center of the ferromagnetic film) as shown in Fig. 3 which is a cross-section taken along the line II-II of Fig. 2, the ferromagnetic film has a perpendicular magnetization component at its central portion corresponding to a circular area extending radially outwardly from a center thereof to about 20 % of the radius of the ferromagnetic film. The perpendicular magnetization component shows such a spin structure which is oriented or magnetized in the up and down direction perpendicular to the surface of the ferromagnetic film.

Also, as apparent from the snapshot of spin structure (across the center of the ferromagnetic film) of a top surface of the ferromagnetic film as shown in Figs. 2 and 4, it is preferred that the ferromagnetic film has a circulating magnetic domain structure (a vortex structure or a spiral magnetization structure), which is oriented or magnetized in the clockwise or counterclockwise direction around the perpendicular magnetization component as a center.

When the average diameter of the ferromagnetic film is less than 0.1 µm, it is difficult to industrially produce such a ferromagnetic film. On the other hand, when the average diameter of the ferromagnetic film is more than 10 µm, it becomes difficult to obtain such a ferromagnetic film having the circulating magnetic domain structure (a vortex structure or a spiral magnetization structure). The average diameter of the ferromagnetic film is preferably in the range of 0.1 to 5 µm.

When the thickness of the ferromagnetic film is less than 0.005 µm or more than 1.5 µm, it is difficult to obtain the ferromagnetic film having a perpendicular magnetization component at its center portion. The thickness of the ferromagnetic film is preferably in the range of 0.01 to 1 µm.

When the ratio of the thickness (t) to the average diameter (d) of the ferromagnetic film is more than 0.5:1, it is difficult to obtain the ferromagnetic film having a perpendicular magnetization component at its center portion. The ratio of the thickness to the average diameter of the ferromagnetic film is preferably not more than 0.2:1. The lower limit of the ratio is preferably 0.005:1.

The top surface shape of the ferromagnetic film in the form of the micro dot is not particularly restricted, and may be of any suitable shape which can be produced by the below-mentioned production process, for example, such as a circular shape, an elliptical shape, a rectangular shape and a square shape.

The coercive force of the magnetic thin film according to the present invention is varied depending upon its shape as well as size and thickness of the ferromagnetic film, and may be usually in the range of 0.08 to 318 kA/m (1 to 4,000 Oe).

As shown in Fig. 1, the magnetic material of the present invention may be produced by forming an optional number of ferromagnetic films (micro dots) each having specific size, thickness and ratio of thickness to average diameter according to applications thereof, on a substrate so that the ferromagnetic films are spaced from each other at optional intervals.

In the magnetic material of the present invention, when an external magnetic field is applied thereto in the in-plane direction (i.e., in the direction horizontal to the surface of the ferromagnetic film), the perpendicular magnetization component formed at the center portion of the ferromagnetic film may be oriented or magnetized optionally in the up or down direction perpendicular to the surface of the ferromagnetic film. On the other hand, when the external magnetic field is applied to the magnetic material in the direction perpendicular to the surface of the ferromagnetic film, all electron spins of the perpendicular magnetization component can be controlled so as to be oriented in the same direction.

Next, the process for producing the magnetic thin film according to the present invention will be described below.

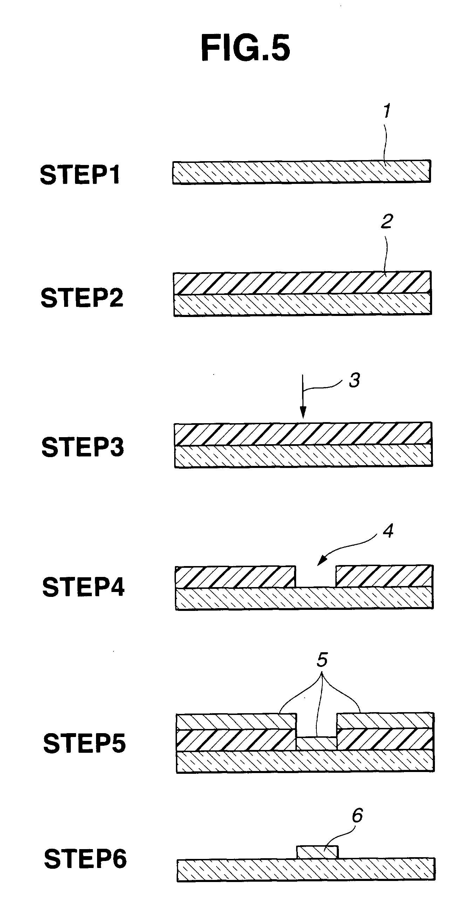

As shown in Fig. 5, the magnetic thin film of the present invention can be produced by the following method. That is, after forming a resist film 2 on a substrate 1, an electron beam, light, X-ray or ion beam 3 is irradiated onto a part of the resist film 2. The thus irradiated part of the resist film is dissolved and removed using an organic solvent to form a resist pattern 4. Then, a ferromagnetic thin film 5 is deposited over the remaining resist film and an exposed portion of the substrate. Thereafter, the resist film is removed together with the ferromagnetic film laminated thereon such that only a ferromagnetic film 6 having a desired shape remains on the substrate.

The suitable resists usable in the present invention are positive-type resists whose molecular chains are cut when irradiated with electron beam, etc., thereby causing reduction in molecular weight and becoming soluble in the organic solvent. Specific examples of the resists may include polymethyl methacrylate (PMMA), polyhexafluorobutyl methacrylate (FBM), polytrifluoroethyl-α-chloroacrylate (EBR-9), poly(butene-1-sulfone) (PBS), diazonaphthoquinone (DNQ)-novolac resins or the like.

The resist film may be formed by coating the resist on the substrate using a spinner. The thickness of the resist film may be controlled by appropriately adjusting the rotational speed of the spinner, and is preferably in the range of 0.1 to 1 µm.

If required, the resist film formed on the substrate may be preferably heat-treated at a temperature of 150 to 250°C. This heat-treatment allows volatile components contained in the resist film to be evaporated therefrom.

The resist pattern may be formed by irradiating electron beam, light, X-ray or ion beam onto the resist film to form a desired latent pattern thereon, and then after developing the latent pattern, dissolving and removing the irradiated part of the resist film using an organic solvent. The resist film is irradiated preferably with electron beam or ion beam, more preferably with electron beam.

If required, the thus formed resist pattern is preferably heat-treated at a temperature of 100 to 150°C. This heat-treatment can improve the adhesion between the substrate and the resist film.

After forming the resist pattern, the ferromagnetic film is deposited over the substrate.

The ferromagnetic film can be formed on the resist pattern and the exposed portion of the substrate by known methods, for example, vacuum deposition method, sputtering method, molecular beam epitaxy method or the like. Among these methods, the use of vacuum deposition method is preferred.

After forming the ferromagnetic film, the resist is dissolved with an organic solvent or release agent such as butanone to remove the resist film together with the ferromagnetic film laminated thereon, thereby allowing only the ferromagnetic film having a desired shape to remain on the substrate.

The magnetic thin film of the present invention is constituted by a ferromagnetic film in the form of a micro dot having at a center portion thereof a perpendicular magnetization component oriented or magnetized in the direction perpendicular to the surface of the film. Therefore, it can be expected to use the magnetic film as a magnetic material having new functions. Further, the application fields of the magnetic film as magnetic material can be more expanded by variously controlling the shape and size of the ferromagnetic film or direction of the perpendicular magnetization component and, if required, by arranging a plurality of the ferromagnetic films in various forms.

### EXAMPLES

The present invention is described in more detail by Examples and Comparative Examples, but the Examples are only illustrative and, therefore, not intended to limit the scope of the present invention.

Various properties were measured by the following methods.
(1) The shape and average diameter of the ferromagnetic film of the magnetic film according to the present invention were confirmed and measured by a scanning electron microscope JSM6301F manufactured by JEOL LTD.
(2) The thickness of the ferromagnetic film of the magnetic thin film according to the present invention was measured by a thickness gauge upon forming the film.
(3) The magnetic thin film of the present invention was observed by a magnetic force microscope (MFM) "Nanoscope 2-type" manufactured by Digital Instrument Corp. to determine whether or not the ferromagnetic film had a perpendicular magnetization component at a center portion thereof, and a circulating magnetic domain structure (a vortex structure or a spiral magnetization structure) around the center of the perpendicular magnetization component. Specifically, the existence of the perpendicular magnetization component was confirmed by black or white central portions on the MFM photograph. Also, the existence of the circulating magnetic domain structure (vortex structure or spiral magnetization structure) was confirmed by uniform color tone on the MFM photograph.

### Example 1:

### <Production of magnetic thin film>

A 0.6 mm-thick Si single crystal substrate provided on the surface thereof with a thermal oxidation film was used as a substrate. After the substrate was sequentially washed with distilled water, 2-butanone and 2-propanol, a positive-type resist ZEP520-22 (tradename: produced by Nihon Zeon Co., Ltd.) was coated on the substrate using a spinner to form a resist film thereon. The thus coated resist film had a thickness of about 300 nm. The substrate coated with the resist film was then heat-treated at 180°C for 30 minutes to evaporate volatile components having a low molecular weight from the resist film.

Next, electron beam was irradiated on the resist film for patterning thereof. More specifically, the resist film was irradiated with electron beam using an electron-beam image forming apparatus "JBX-5000SF" (manufactured by JEOL LTD) in which LaB₆ single crystal was used as an electron beam source, and the accelerated voltage was set to 50 kV. After completion of the image formation, the resist film with the latent image was developed with N-amyl acetate for 90 seconds, and then washed with 4-methyl-2-pentanone to dissolve and remove the unnecessary (irradiated) portions of the resist film, thereby forming a resist pattern. Each removed portion of the resist film was of a disc shape having an average diameter of 1 µm. Then, the substrate with the thus formed resist pattern was heat-treated at 120°C for 10 minutes to enhance the adhesion between the substrate and the resist film.

The substrate with the resist pattern was introduced into an ultra-high vacuum deposition apparatus "JPS-100" (manufactured by Nichiden Anelva Co. Ltd.) whose vacuum degree was set to 10⁻⁸ torr. Then, a ferromagnetic film was deposited over the substrate by an electron-gun heating method using Ni₈₁Fe₁₉ alloy as a deposition source (purity: 99.9%). The substrate temperature and the film-formation speed were set to room temperature and 0.2 Å/s, respectively. Meanwhile, the thickness of the ferromagnetic film was controlled by a quartz oscillation-type film thickness sensor and a shutter controller.

After deposition of the ferromagnetic film, the substrate was immersed in 2-butanone to dissolve the resist film. As a result, the resist film was removed together with the ferromagnetic film laminated thereon such that only the ferromagnetic film directly deposited on the substrate remained on the substrate.

The thus obtained magnetic thin film was constituted by the ferromagnetic film of a disc shape having an average diameter of 1 µm, a thickness of 50 nm and a ratio of thickness to average diameter of 0.005:1.

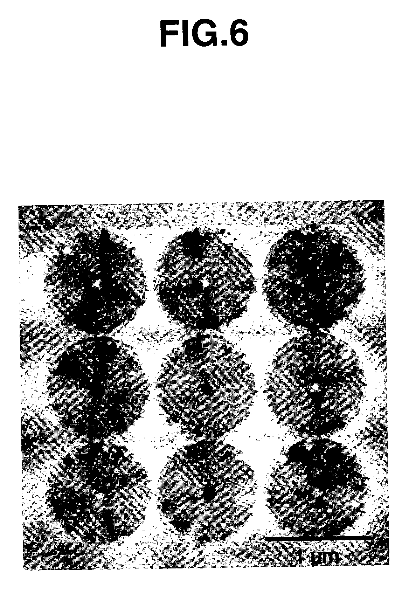

Then, an external magnetic field of 1193.7 kA/m (15 kOe) was applied to the obtained magnetic thin film constituted by the ferromagnetic film in the in-plane direction. The magnetic thin film was then observed by a magnetic force microscope. Fig. 6 shows an MFM photograph of the magnetic thin film. As shown in Fig. 6, a white or black spot was observed only at the center portion of the ferromagnetic film. As a result, it was confirmed that the ferromagnetic film had a perpendicular magnetization component at the center thereof. Further, since the ferromagnetic film showed a uniform color tone except for the center thereof, it was confirmed that the circulating magnetic domain structure (vortex structure or spiral magnetization structure) was formed around the center of the ferromagnetic film.

### Example 2:

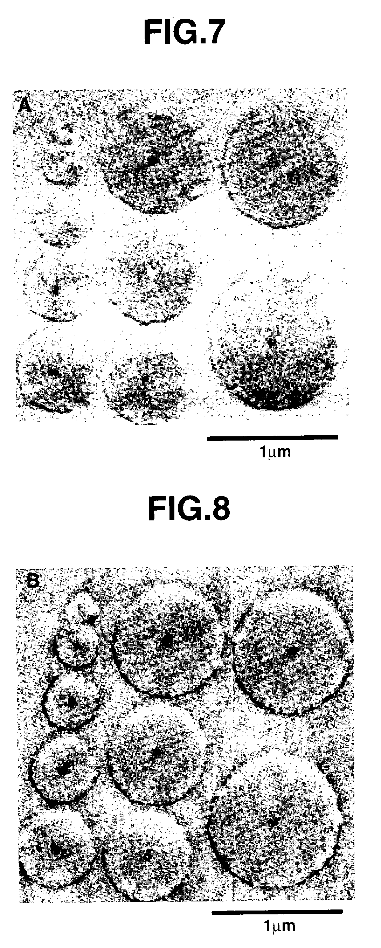

The same procedure as defined in Example 1 was conducted except that ten disc-shaped ferromagnetic films having different average diameters ranging from 0.1 to 1 µm were formed on the substrate, thereby obtaining a magnetic thin film. Then, an external magnetic field of 1193.7 kA/m (15 kOe) was applied to the obtained magnetic thin films in the in-plane direction. The magnetic thin film was observed by a magnetic force microscope. Fig. 7 shows an MFM photograph of the magnetic thin film. Since a white or black spot was observed only at the center portion of each ferromagnetic film, it was confirmed that each ferromagnetic film had at the center thereof a perpendicular magnetization component oriented or magnetized in the up or down direction perpendicular to the surface thereof. Further, since each ferromagnetic film showed a uniform color tone except for the center thereof, it was confirmed that the circulating magnetic domain structure (vortex structure or spiral magnetization structure) was formed around the perpendicular magnetization component.

Then, after an external magnetic field of 1193.7 kA/m (15 kOe) was applied to the magnetic thin film in the direction perpendicular to the surface of the magnetic thin film, the magnetic thin film was observed again by a magnetic force microscope. Fig. 8 shows an MFM photograph of the magnetic thin film. As shown in Fig. 8, although each ferromagnetic film showed a uniform color tone except for the center portion thereof, whole part of the center of the ferromagnetic film was colored black. As a result, it was confirmed that the central magnetization component was oriented or magnetized in the same direction. Due to this fact, it was also confirmed that the perpendicular magnetization component was present at the center thereof, and the direction thereof was controllable by applying an external magnetic field thereto.

## Claims

1. A magnetic film comprising:
a substrate; and
a ferromagnetic film which is provided on said substrate and which has an average diameter of 0.1 to 10 *µ*m, a thickness of 0.005 to 1.5 *µ*m and a ratio of said thickness to said average diameter of not more than 0.5:1,
said ferromagnetic film having at a center portion thereof a perpendicular magnetization component, which is oriented or magnetized in the up or down direction perpendicular to the surface of said magnetic film.

2. A magnetic film according to claim 1, wherein said ferromagnetic film comprises a circulating magnetic domain structure which is oriented or magnetized in the clockwise or counterclockwise direction around said perpendicular magnetization component as a center.

3. A magnetic film according to claim 1 or 2, which has a coercive force value of 0.08 to 318 kA/m.

4. A magnetic film according to any of the preceding claims, wherein said ferromagnetic film has an average diameter of 0.1 to 5 *µ*m, a thickness of 0.005 to 1.0 *µ*m and a ratio of said thickness to said average diameter of 0.005:1 to 0.5:1.

5. A magnetic film according to any of the preceding claims, wherein the substrate is silicon, glass or MgO.

6. A magnetic film according to any of the preceding claims, wherein the substrate has a thickness of 0.01 to 1mm.

7. A magnetic film according to any of the preceding claims, wherein the ferromagnetic film comprises Fe-Ni alloy, Fe-Si alloy or Fe-Si-Al alloy.

8. A process for producing a magnetic film according to claim 1, the process comprising:
(a) providing a resist film on a substrate;
(b) irradiating an electron beam, light, X-ray or ion beam onto a part of said resist film;
(c) dissolving the irradiated part of the resist film with an organic solvent to remove the part of the resist film having, an average diameter of 0.1 to 10 *µ* m from the substrate;
(d) forming a ferromagnetic film over the remaining resist film and an exposed portion of the substrate from which the resist film is removed so that a ferromagnetic film having a thickness of 0.005 to 1.5 *µ*m and a ratio of said thickness to said average diameter of not more than 0.5:1 is formed on the exposed portion of the substrate; and
(e) removing the resist film together with the ferromagnetic film laminated thereon so that only the ferromagnetic film directly formed on the substrate remains on the substrate.

9. A process according to claim 8, wherein the resist film provided in step (a) is heat treated at 150-250°C before step (b).

10. A process according to claim 8 or 9, wherein the irradiated and partially dissolved resist film of step (c) is heat treated at 100-150°C before step (d).
